# EUROPEAN PATENT APPLICATION

(11) **EP 1 798 901 A1**
(43) Date of publication of application: **20.06.2007**
(21) Application number: 05292752.2
(22) Date of filing: 15.12.2005
(51) Int. Cl.: H04L 12/28, H04L 29/12

(54) **Access multiplexer**

(71) Applicant: Alcatel Lucent, 75008 Paris (FR)
(72) Inventor: Cetin, Riza, 2018 Antwerp (BE); Peeters, Ronny Jozef Leon, 2660 Hoboken (BE)
(74) Representative: Narmon, Gisèle Marie Thérèse

(57) **Abstract**

In access multiplexers (1) comprising network interfaces (22) for interfacing network links (12) with network units (2) and comprising customer interfaces (23-25) for interfacing customer links (13-15) with customer units (3-5) and comprising coupling means (31) for coupling the interfaces (22-25), allocating means (32) are introduced for allocating Medium Access Control addresses to Internet Protocol sessions and controlling means (30) are introduced for controlling the routing of packets within the access multiplexers (1) in dependence of allocations, for increasing efficiencies. The customer units (3-5) form part of one subnet (10). The network links (12) comprise Ethernet connections defined by Virtual Local Area Network tags per subnet (10). The allocating means (32) comprise relating means (33) for relating combinations of Virtual Local Area Network tags and Medium Access Control addresses to session identifications of the Internet Protocol sessions, with the allocations comprising relationships. The customer links (13-15) comprise Asynchronous Transfer Mode connections or Ethernet connections.

## Description

The invention relates to an access multiplexer comprising a network interface for interfacing a network link with a network unit and comprising a customer interface for interfacing a customer link with a customer unit and comprising means for coupling the network interface and the customer interface.

Examples of such an access multiplexer are digital subscriber line access multiplexers, examples of such a network unit are edge routers, and examples of such a customer unit are customer premises equipment such as routers and modems and personal computers, without excluding other kinds of access multiplexers and other kinds of network units and other kinds of customer units.

A prior art access multiplexer is of common general knowledge. It comprises means such as a cross-connect or a bridge for coupling a network interface on the one hand and customer interfaces on the other hand, without excluding other kinds of coupling means. The network interface interfaces a network link coupled to a network unit. A first customer interface interfaces a first customer link coupled to a first customer unit and a second customer interface interfaces a second customer link coupled to a second customer unit. The network interface couples the network link to the coupling means and vice versa. The first customer interface couples the first customer link to the coupling means and vice versa. The second customer interface coupled the second customer link to the coupling means and vice versa.

The known access multiplexer is disadvantageous, inter alia, owing to the fact that, for example in case the customer units form part of one and the same subnet and in case the network link comprises an Ethernet connection, a Virtual Local Area Network tag per customer unit will be required. Then, Virtual Local Area Network tag aggregation has to be performed in the network unit, and downstream broadcast traffic has to be sent via the Virtual Local Area Network couplings in parallel. This is a relatively inefficient environment.

It is an object of the invention, inter alia, to provide an access multiplexer as defined above that forms part of a relatively efficient environment.

The access multiplexer according to the invention is characterized in that the access multiplexer comprises means for allocating a Medium Access Control address to an Internet Protocol session and comprises means for controlling the access multiplexer in dependence of an allocation.

The allocating means allocate a first Medium Access Control address to a first Internet Protocol session and allocate a second Medium Access Control address different from the first Medium Access Control address to a second Internet Protocol session. This way, Medium Access Control addresses are used inside the access multiplexer. An allocation originating from the allocating means is provided to the controlling means, to control (the routing within) the access multiplexer (the coupling means) in dependence of the allocations. This access multiplexer makes its environment relatively efficient. For example in case the customer units form part of one and the same subnet and in case the network link comprises an Ethernet connection, a Virtual Local Area Network tag per customer unit is no longer required. Then, Virtual Local Area Network tag aggregation does no longer need to be performed in the network unit or does only need to be performed at a reduced level, and downstream broadcast traffic does no longer need to be in parallel.

The access multiplexer according to the invention is further advantageous, inter alia, in that it is more efficient itself, owing to the fact that for example in case the customer units form part of one and the same subnet and in case the network link comprises an Ethernet connection, the access multiplexer does no longer need to handle aggregated Virtual Local Area Network traffic.

In case the customer units do not form part of one and the same subnet and/or in case the network link does not comprises an Ethernet connection, the access multiplexer according to the invention is still expected to be advantageous.

The allocating means for example comprise means for storing Medium Access Control addresses and representations of the Internet Protocol sessions such as Internet Protocol session identifications. Such Internet Protocol sessions take place via the customer unit and via the customer interface.

An embodiment of the access multiplexer according to the invention is characterized in that the Medium Access Control address of the Internet Protocol session is an internal Medium Access Control address that is a destination address in a downstream direction from the network unit to the access multiplexer and that is a source address in an upstream direction from the access multiplexer to the network unit.

Such internal Medium Access Control addresses replace for example one common Medium Access Control address of an entire access multiplexer. These Medium Access Control addresses are internal Medium Access Control addresses owing to the fact that they are allocated to internal traffic inside the access multiplexer and/or to internal parts of the access multiplexer, such as the customer interfaces. These internal Medium Access Control addresses are however also used in external communications between the access multiplexer and the network unit.

An embodiment of the access multiplexer according to the invention is characterized in that the coupling means comprise a cross connect per subnet, the customer unit forming part of the subnet.

Especially in case the customer units form part of one and the same subnet, the access multiplexer according to the invention will be very advantageous.

An embodiment of the access multiplexer according to the invention is characterized in that the network link comprises an Ethernet connection defined by a Virtual Local Area Network tag per subnet.

Especially in case the network link comprises an Ethernet connection defined by a Virtual Local Area Network tag per subnet, the access multiplexer according to the invention will be very advantageous.

An embodiment of the access multiplexer according to the invention is characterized in that the allocating means comprise means for relating a combination of a Virtual Local Area Network tag and a Medium Access Control address to a session identification of the Internet Protocol session and in that the allocation comprises a relationship originating from the relating means.

The relating means for example comprise means for storing relationships such as a table memory for storing per row in a first column a Virtual Local Area Network tag and in a second column a Medium Access Control address and in a third column a session identification of the Internet Protocol session. This session identification might correspond to a port number of a port that is coupled to a customer interface or might correspond to a combination of a port number of a port coupled to a customer interface and an address such as a Medium Access Control address of the customer unit coupled to this customer interface, or its user, as all further explained below.

An embodiment of the access multiplexer according to the invention is characterized in that the customer link comprises an Asynchronous Transfer Mode connection or an Ethernet connection.

Especially in case the customer link comprises an Asynchronous Transfer Mode connection or an Ethernet connection, the access multiplexer according to the invention will be very advantageous. In case the customer link comprises an Asynchronous Transfer Mode connection, an allocation of a Medium Access control address to an Internet Protocol session will correspond to allocating the Medium Access control address to the customer interface involved in this Internet Protocol session and/or to allocating the Medium Access control address to a Permanent Virtual Connection between the customer unit and the access multiplexer. In case the customer link comprises an Ethernet connection, an allocation of a Medium Access control address to an Internet Protocol session will correspond to allocating the Medium Access control address to a combination of the customer interface (Ethernet port) involved in this Internet Protocol session and a Medium Access Control address of the customer unit or its user and/or to allocating the Medium Access control address to a combination of a Permanent Virtual Connection between the customer unit and the access multiplexer and a Medium Access Control address of the customer unit or its user.

The invention also relates to means as defined above for use in an access multiplexer as defined above. These means may be the allocating means or the relating means. Such means may be sold and/or produced and/or set up separately from the access multiplexer according to the invention.

The invention also relates to a method for use in an access multiplexer comprising a network interface for interfacing a network link with a network unit and comprising a customer interface for interfacing a customer link with a customer unit and comprising means for coupling the network interface and the customer interface.

The method according to the invention is characterized in that the method comprises a first method step of allocating a Medium Access Control address to an Internet Protocol session and comprises a second method step of controlling the access multiplexer in dependence of an allocation.

Embodiments of the method according to the invention correspond with the embodiments of the access multiplexer according to the invention.

The invention also relates to a computer program product for performing the method steps of the method as defined above.

The invention also relates to a medium comprising the computer program product as defined above.

The invention is based upon an insight, inter alia, that for example one common Medium Access Control address for an entire access multiplexer results in an inefficient environment. The invention is based upon a basic idea, inter alia, that Medium Access Control addresses should be allocated to Internet Protocol sessions and the access multiplexer should be controlled in dependence of allocations.

The invention solves the problem, inter alia, to provide an access multiplexer that forms part of a relatively efficient environment. The access multiplexer according to the invention is further advantageous, inter alia, in that it is more efficient itself, owing to the fact that for example in case the customer units form part of one and the same subnet and in case the network link comprises an Ethernet connection, the access multiplexer does no longer need to handle aggregated Virtual Local Area Network traffic.

These and other aspects of the invention will be apparent from and elucidated with reference to the embodiments(s) described hereinafter.
Fig. 1 shows diagrammatically an access multiplexer according to the invention coupled to a network unit and to three customer units,
Fig. 2 shows diagrammatically an access multiplexer according to the invention coupled to a network unit and to two plus two customer units, and
Fig. 3 shows diagrammatically an access multiplexer according to the invention in greater detail.

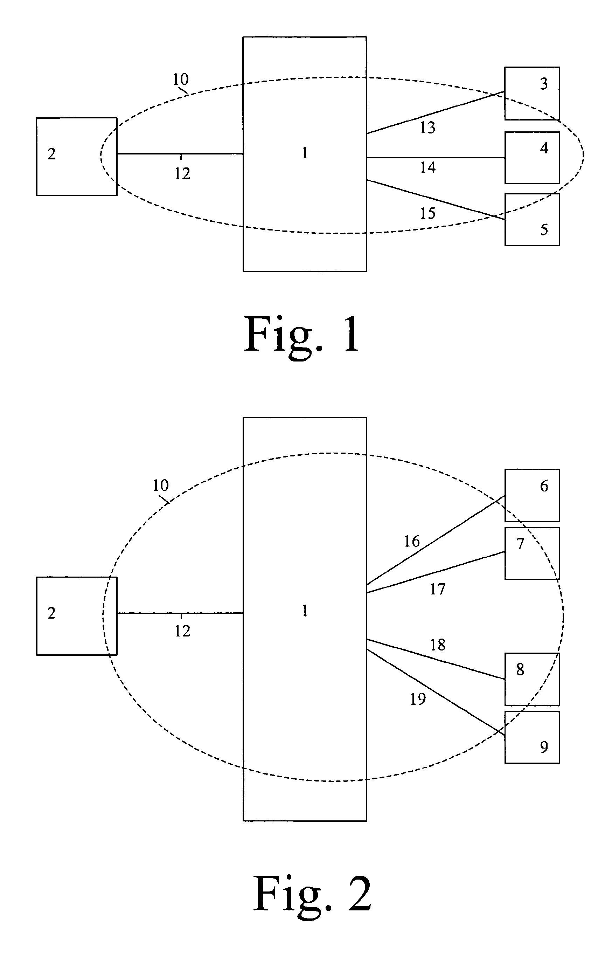

The access multiplexer 1 according to the invention shown in Fig. 1 is coupled via a network link 12 to a network unit 2 and via a first customer link 13 to a first customer unit 3 and via a second customer link 14 to a second customer unit 4 and via a third customer link 15 to a third customer unit 5. The customer units 3-5 form part of one and the same subnet 10. The access multiplexer 1 is for example a digital subscriber line access multiplexer, the network unit 2 is for example an edge router, and the customer units 3-5 are for example customer premises equipment such as routers and modems and personal computers. The customer links 13-15 comprise for example Asynchronous Transfer Mode connections.

The access multiplexer 1 according to the invention shown in Fig. 2 is coupled via the network link 12 to the network unit 2 and via customer links 16-19 to customer units 6-9. The customer units 6-9 form part of one and the same subnet 10. The customer links 16, 17 comprise for example Asynchronous Transfer Mode connections and the customer links 18, 19 comprise for example Ethernet connections.

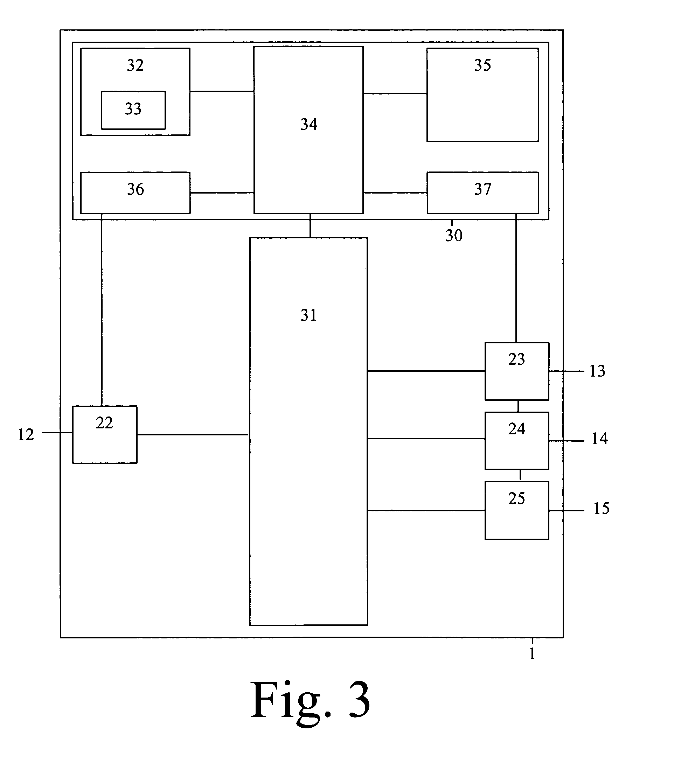

The access multiplexer 1 according to the invention shown in Fig. 3 comprises a network interface 22 for interfacing the network link 12 and comprises a first customer interface 23 for interfacing the first customer link 13 and comprises a second customer interface 24 for interfacing the second customer link 14 and comprises a third customer interface 25 for interfacing the third customer links 15 and comprises means 31 for coupling the network interface 22 on the one hand and the customer interfaces 23-25 on the other hand and comprises means 30 for controlling the access multiplexer 1. The controlling means comprise means 32 for allocating Medium Access Control addresses to Internet Protocol sessions performed via the customer units 3-5 and the customer interfaces 23-25. The controlling means 30 control the access multiplexer 1 in dependence of allocations originating from the allocating means 32 and comprise monitoring means 36, 37 for monitoring the interfaces 22 and 23-25 for example for reporting incoming and/or outgoing traffic and comprise means 35 for storing control information. The allocating means 32 preferably comprise means 33 for relating a combination of a Virtual Local Area Network tag and a Medium Access Control address to a session identification of the Internet Protocol session. This session identification might correspond to a port number of a port that is coupled to a customer interface or might correspond to a combination of a port number of a port coupled to a customer interface and an address such as a Medium Access Control address of the customer unit coupled to this customer interface, or its user, with the allocation comprising a relationship originating from the relating means 33. The means 32-37 are coupled to a processor 34. The coupling means 31 for example comprise a cross connect or a bridge. The monitoring means 36, 37 might further be used for interfacing the interfaces 22-25 and the processor 34 for controlling buffer functions and/or encapsulation functions and/or decapsulation functions and/or address insertion functions and/or address replacement functions and/or address deletion functions etc. of the interfaces 22-25.

In a prior art situation, the allocating means 32 are not present, and the access multiplexer 1 is for example defined by one common Medium Access Control address for communication with the network unit 2 and the customer units 3-5. In case the customer units 3-5 form part of one and the same subnet 10 and in case the network link 12 comprises an Ethernet connection, a Virtual Local Area Network tag will be required per customer unit 3-5. Then, Virtual Local Area Network tag aggregation has to be performed in the network unit 2, and downstream broadcast traffic has to be sent via the Virtual Local Area Network couplings in parallel. This is a relatively inefficient environment.

More particular, for a customer unit such as a customer premises equipment CPE acting as a router (business users) connected to a digital subscriber line access multiplexer DSLAM via an Internet Protocol over Asynchronous Transfer Mode IPoA encapsulation, the DSLAM cross connects the CPE IPoA customer interface to an Internet Protocol over Ethernet IPoE network interface as identified by a Virtual Local Area Network tag VLAN which is terminated at the network unit in the form of a service provider edge router. Then, in an upstream direction,
- IP packets are extracted from IPoA, encapsulated in IPoE and bridged towards the edge router,
- the destination Medium Access Control MAC address (the MAC address of the edge router) is either learnt via a protocol such as an address resolution protocol ARP or is configured in the DSLAM in case the destination IP address is a unicast IP address (the destination MAC should be broadcast when the destination IP is broadcast, and the destination MAC should be multicast when the destination IP is multicast), and
- the source MAC address is the MAC address of the DSLAM, and in a downstream direction,
- IP packets are extracted from IPoE, encapsulated in IPoA and sent over the CPE customer interface (Permanent Virtual Connection).

On the IPoE network interface, the MAC address of the DSLAM is used as a source MAC address (in an upstream direction) and as a destination MAC address except for broadcast and multicast packets (in a downstream direction), and one VLAN is used for each CPE to identify the CPE interface uniquely.

In case multiple CPEs, which form part of the same subnet, are connected to the DSLAM, then VLAN aggregation has to be enabled at the edge router. Then, VLAN-1 is used for a first CPE, VLAN-2 is used for a second CPE etc. VLAN-1 and VLAN-2 have to be configured as VLAN aggregation at the edge router since both VLANs are in the same subnet.

Furthermore, as a consequence, any broadcast packets in the downstream direction will be sent in each VLAN (e.g. via ARP). Hence, this causes more traffic in the Ethernet Metropole Area Network EMAN.

According to the invention, a relatively efficient environment is created by introducing the allocating means 32 for allocating a Medium Access Control address to an Internet Protocol session and by letting the controlling means 30 control the access multiplexer 1 in dependence of an allocation.

The allocating means 32 allocate a first Medium Access Control address to a first Internet Protocol session and allocate a second Medium Access Control address different from the first Medium Access Control address to a second Internet Protocol session and allocate a third Medium Access Control address different from the first and second Medium Access Control addresses to a third Internet Protocol session. This way, Medium Access Control addresses are used inside the access multiplexer 1. An allocation originating from the allocating means 32 is provided to the controlling means 30, to control (the routing within) the access multiplexer 1 in dependence of the allocation.

The allocating means 32 for example comprise means for storing Medium Access Control addresses and representations of the Internet Protocol sessions such as Internet Protocol session identifications.

Preferably, the Medium Access Control addresses of the Internet Protocol sessions are internal Medium Access Control addresses that are destination addresses (except for broadcast and multicast) in a downstream direction from the network unit 2 to the access multiplexer 1 and that are source addresses in an upstream direction from the access multiplexer 1 to the network unit 2 as further explained in greater detail below.

Such internal Medium Access Control addresses replace for example one common Medium Access Control address of an entire access multiplexer 1. These Medium Access Control addresses are internal Medium Access Control addresses owing to the fact that they are allocated to internal traffic inside the access multiplexer 1 and/or to internal parts of the access multiplexer 1, such as the customer interfaces 23-25. These internal Medium Access Control addresses are however also used in external communications between the access multiplexer 1 and the network unit 2.

Preferably, the network link 12 comprises an Ethernet connection defined by a Virtual Local Area Network tag per subnet 10, and/or the allocating means 32 comprise the relating means 33 for relating a combination of a Virtual Local Area Network tag and a Medium Access Control address to a session identification of the Internet Protocol session, with the allocation comprising a relationship originating from the relating means 33. The relating means 33 for example comprise means for storing relationships such as a table memory for storing per row in a first column a Virtual Local Area Network tag and in a second column a Medium Access Control address and in a third column a session identification of the Internet Protocol session. This session identification might correspond to a port number of a port that is coupled to a customer interface or might correspond to a combination of a port number of a port coupled to a customer interface and an address such as a Medium Access Control address of the customer unit coupled to this customer interface, or its user.

More particular, the invention introduces in the DSLAM a cross connect for each subnet where the cross connect deals with the translation of the VLAN together with the internally assigned MAC address into a CPE port number in order to identify the CPE port using routed encapsulation (IPoA) uniquely. This translation is done using a database containing the relations between the VLAN and the internally assigned MAC address to the corresponding cross connect CPE port number.

Then there is only one VLAN between the DSLAM and the edge router per IP subnet. The DSLAM allocates an internal MAC address per PVC and in the downstream direction the CPE interface (PVC) is selected based on VLAN+MAC address combination.

The upstream forwarding of an IP packet received from an IPoA CPE interface goes as follows for unicast IP packets:
- the IP packet is encapsulated into Ethernet.
- the VLAN is set to the VLAN associated with the CPE interface.
- the source MAC is set to the internal MAC allocated for the CPE interface.
- the destination MAC is set to the MAC of the edge router (either configured in the DSLAM or learnt via an ARP),
- in case of a broadcast of IP-packets, the destination MAC is set to the broadcast MAC,
- in case of a multicast of IP-packets, the destination MAC is set to the multicast MAC (derived from the multicast destination IP address).

The downstream forwarding of an IP packet received from an IPoE network interface to an IPoA CPE interface goes as follows for unicast IP packets:
- the VLAN is the VLAN associated with the cross connect,
- the destination MAC is the internal MAC allocated for the CPE interface,
- the CPE interface is selected based on VLAN + destination MAC combination,
- the IP packet is encapsulated into ATM and sent over the CPE interface,
- in case of a broadcast of IP-packets, the destination MAC is the broadcast MAC, one copy of the IP packet is sent on each CPE interface associated with the VLAN,
- in case of a multicast of IP-packets, the destination MAC is the multicast MAC, one copy of the IP packet is sent on each CPE interface associated with the VLAN.
   Optionally, Internet Group Management Protocol IGMP snooping can be enabled in the DSLAM. In this case, multicast IP packets are sent according to the multicast tree established dynamically by snooping IGMP messages.

A broadcast ARP request initiated by the edge router goes as follows:
- the VLAN is the VLAN associated with the cross connect,
- the target IP address (in the ARP message) is compared with the IP addresses of the CPEs associated with the VLAN.

If there is a match, then the DSLAM sends an ARP reply where the source MAC is set to the internal MAC address of the CPE of which the IP address matches the target IP address in the ARP request, this requires the DSLAM to learn IP addresses of the CPEs, CPE IP addresses can either be statically configured in DSLAM or can be dynamically learnt by snooping Dynamic Host Configuration Protocol DHCP messages. It is also possible that there are CPEs connected to the DSLAM via IPoE interfaces and that they are in the same subnet as the IPoA CPEs. In this case, to make sure that the CPE MAC addresses will not clash with the internal MAC addresses allocated for the IPoA CPEs, it is better to perform MAC translation for the IPoE CPEs.

An upstream forwarding of an IP packet received from an IPoE CPE interface goes as follows for a unicast, a broadcast, a multicast of IP packets:
- the VLAN is set to the VLAN associated with the CPE subnet,
- the source MAC is replaced by the internal MAC allocated for the CPE MAC,
- the destination MAC remains unchanged.

The ARP handling goes as follows:
- the DSLAM provides an ARP proxy,
- the DSLAM responds with an ARP reply where the source MAC is set to edge router MAC,
- the edge router MAC can either be configured in DSLAM or can be learnt via an ARP.

The downstream forwarding of an IP packet received from an IPoE edge router interface to an IPoE CPE interface for unicast IP packets goes as follows:
- the VLAN is the VLAN associated with the cross-connect,
- the destination MAC is the internal MAC allocated for the CPE MAC,
- the CPE interface is selected based on VLAN + destination MAC combination,
- the IPoE packet is sent over the CPE interface,
- the destination MAC is replaced by the CPE MAC,
- the source MAC remains unchanged,
- in case of broadcasting IP-packets, the destination MAC is the broadcast MAC, one copy of the IPoE packet is sent on each CPE interface associated with the VLAN,
- in case of multicasting IP-packets, the destination MAC is the multicast MAC, one copy of the IPoE packet is sent on each CPE interface associated with the VLAN.
   Optionally, IGMP snooping can be enabled in DSLAM. In this case, multicast IP packets are sent according to the multicast tree established dynamically by snooping IGMP messages.

A broadcast of an ARP request initiated by the edge router goes as follows:
- the DSLAM provides an ARP proxy,
- the VLAN is the VLAN associated with the cross-connect,
- the target IP address (in the ARP message) is compared with the IP addresses of the CPEs associated with the VLAN,
- if there is a match, then the DSLAM sends an ARP reply where the source MAC is set to the internal MAC corresponding to the CPE MAC of which IP address matches the target IP address in the ARP request,
- this requires the DSLAM to learn IP addresses of the CPEs, CPE IP addresses can either be statically configured in the DSLAM or can be dynamically learnt by snooping DHCP messages.
   In case the CPE interface encapsulation type IPoA or IPoE cannot be known in advance, auto-detection of the encapsulation type can be enabled in DSLAM. In this case, DSLAM detects the encapsulation type based on the frame sent by the CPE and adapts the cross connect behavior accordingly.

This all results in advantages such as a reduction of a number of VLANs in the EMAN network as only one VLAN per subnet is required and such as no longer needing to have VLAN aggregation at the edge router.

In Fig. 1-3, each coupling / connection may be a wired coupling / connection or a wireless coupling / connection. Any block shown may be divided into sub- block, and any two or more block may be integrated into a new and larger block. Any block shown may comprise hardware and/or software. The computer program product according to the invention may be stored on and/or comprise a fixed medium such as the storing means 35 or a removable medium not shown.

The expression "for" in for example "for interfacing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities.

The steps and/or functions of allocating and controlling do not exclude further steps and/or functions, like for example, inter alia, the steps and/or functions described for the Figures etc.

## Claims

1. Access multiplexer (1) comprising a network interface (22) for interfacing a network link (12) with a network unit (2) and comprising a customer interface (23) for interfacing a customer link (13) with a customer unit (3) and comprising means (31) for coupling the network interface (22) and the customer interface (23), **characterized in that** the access multiplexer (1) comprises means (32) for allocating a Medium Access Control address to an Internet Protocol session and comprises means (30) for controlling the access multiplexer (1) in dependence of an allocation.

2. Access multiplexer (1) as defined in claim 1, **characterized in that** the Medium Access Control address of the Internet Protocol session is an internal Medium Access Control address that is a destination address in a downstream direction from the network unit (2) to the access multiplexer (1) and that is a source address in an upstream direction from the access multiplexer (1) to the network unit (2).

3. Access multiplexer (1) as defined in claim 2, **characterized in that** the coupling means (31) comprise a cross connect per subnet (10), the customer unit (3) forming part of the subnet (10).

4. Access multiplexer (1) as defined in claim 3, **characterized in that** the network link (12) comprises an Ethernet connection defined by a Virtual Local Area Network tag per subnet (10).

5. Access multiplexer (1) as defined in claim 4, **characterized in that** the allocating means (32) comprise means (33) for relating a combination of a Virtual Local Area Network tag and a Medium Access Control address to a session identification of the Internet Protocol session and **in that** the allocation comprises a relationship originating from the relating means (33).

6. Access multiplexer (1) as defined in claim 5, **characterized in that** the customer link (13, 14) comprises an Asynchronous Transfer Mode connection or an Ethernet connection.

7. Means (32, 33) as defined in any one of the claims 1-6 for use in an access multiplexer (1).

8. Method for use in an access multiplexer (1) comprising a network interface (22) for interfacing a network link (12) with a network unit (2) and comprising a customer interface (23) for interfacing a customer link (13) with a customer unit (3) and comprising means (31) for coupling the network interface (22) and the customer interface (23), **characterized in that** the method comprises a first method step of allocating a Medium Access Control address to an Internet Protocol session the customer interfaces (23, 24) and comprises a second method step of controlling the access multiplexer (1) in dependence of an allocation.

9. Computer program product for performing the method steps of the method as defined in claim 8.

10. Medium comprising the computer program product as defined in claim 9.
